# EUROPEAN PATENT SPECIFICATION

(11) **EP 1 417 246 B1**
(45) Date of publication and mention of the grant of the patent: **14.12.2005**
(21) Application number: 01956732.0
(22) Date of filing: 17.08.2001
(51) Int. Cl.: C08G 18/69, C08G 18/08, C08G 18/12, C09D 175/14

(54) **USE OF CHEMICALY RESISTANT AND REMOVABLE POLYURETHANE COATINGS**
VERWENDUNG CHEMISCH BESTÄNDIGER UND ABZIEHBARER POLYURETHAN BESCHICHTUNGEN
UTILIZATION DE REVETEMENTS DE POLYURETHANE CHIMIQUEMENT RESISTANT ET AMOVIBLE

(43) Date of publication of application: 12.05.2004
(73) Proprietor: Henkel Kommanditgesellschaft auf Aktien, 40589 Düsseldorf (DE)
(72) Inventor: JORDENS, Gerard, W., NL-6712 HG Ede (NL); EVENBOER, Henrica, A., M., NL-6713 MN Ede (NL)
(74) Representative: Scheffler, Ingolf
(86) International application number: PCT/IB2001/001504
(87) International publication number: WO 2003/016375

(56) References cited:
- EP-A- 1 172 389
- WO-A-99/48941

## Description

This invention relates to aqueous polyurethane dispersions based on hydroxylated polydiene resins, especially to the use of such dispersions to apply chemically resistant coatings to various surfaces and substrates.

Chemically resistant coatings containing aqueous polyurethane dispersions based upon hydroxylated polydienes can be used in the formulation of temporary protective peelable coatings useful as masking agents for selective chemical and mechanical protection of metal surfaces during chemical treatments such as anodizing, plating, adhesive bonding, or for mechanical protection during forming, machining, drilling, routing, or general part handling of both metallic and non-metallic articles.

Chemically resistant peelable coatings when properly formulated have low uniform peel adhesion before and after chemical processing, thermal and oxidative stability, possess the ability to be scribed to produce complex masked patterns, may be machined or drilled without loss of adhesion at the tool surface, and following all processing operations may be removed by hand peeling without the use of solvents or high temperatures.

In the practice of the arts of anodizing or plating of metal surfaces, chemically resistant temporary barriers such as conductive or non-conductive tapes, waxes, solvent-based lacquers, and solvent and water-borne peelable coatings known collectively as "resists" or "stop-offs" are used to protect specific areas of a workpiece from contact with chemical solutions.

Tapes can be applied by hand lay-up to protect the desired areas; waxes can be applied by hot dipping of the entire workpiece followed by hand trimming; solvent-borne lacquers can be applied by brushing, flowing, peelable coatings can be applied selectively by brushing or dipping; and solvent or water-borne peelable coatings can be applied by brushing, flowing, dipping, or spraying followed by hand scribing and peeling to expose areas to be chemically treated, in either acidic or basic environments.

Following chemical treatment(s) tapes can be removed by hand peeling; waxes can be removed mechanically, thermally or by the use of cleaning baths; lacquers can be removed by solvents or by thermal destruction; and solvent or water-borne peelable coatings can be removed by hand peeling.

In the construction of aerospace assemblies, it is desirable to protect polished alclad aluminum surfaces from mechanical and chemical treatments. For this purpose, a peelable temporary protective coating known as a bond line maskant is employed. In a typical process, a workpiece is pre-cleaned followed by spray application of the bond line maskant. The coating is cured by combinations of air drying and oven curing. After the maskant is dried and cured, selected areas of the parts to be treated may be removed by mechanical or laser scribing. The scribed sections of the maskant are removed by hand peeling. The exposed areas then receive chemical treatments such as etching and anodizing, and a bonding primer is applied and oven cured. Machining operations such as drilling or routing may also be performed. Different parts may then be assembled by adhesive bonding. Adhesive is applied over the bonding primer and the adhesive joint cured at elevated temperatures and pressures. After all the chemical and mechanical processing is completed, the bond line maskant is removed by hand peeling.
Many of the coatings or maskants used today are rubber elastomers dissolved in organic solvents, such as toluene/xylene, perchloroethylene or methylene chloride. See, for example, U.S. Patent No. 4,301,194. With increasing government regulation of volatile organic solvents, it is desirable to find alternative chemistries for such protective coatings. It is also desirable to avoid the expensive incorporation of silyl groups.

Silyl-free, aqueous polyurethane dispersions containing a urethane prepolymer are provided, which prepolymer comprises the reaction product of one or more hydroxylated polydiene resins (preferably a hydroxy-terminated polybutadiene resin), a diol-containing carboxylic acid salt (preferably a dimethylol propionic acid salt) and an aliphatic diisocyanate, which reaction product has been chain extended with a diamine. Also provided are chemically resistant coatings for substrate surfaces containing such dispersions, methods for applying the dispersion to the surface, the resulting coated surface, and the like.

It has now been found that chemically resistant coatings for substrates (such as metal), of the type hereinabove described (including tapes, waxes, lacquers, and peelable coatings), can be prepared via the use of aqueous polyurethane dispersions based upon hydroxylated polydiene resins, thus avoiding the need for use of high VOC (volatile organic content) solvents.

These dispersions contain a urethane prepolymer, typically prepared in a light solvent such as methylethylketone or tetrahydrofuran, which prepolymer comprises the reaction product of the polydiene polyol(s), the diol-containing carboxylic acid salt (such as the triethyl ammonium salt of dimethylol propionic acid) and the aliphatic diisocyanate (such as tetramethyl xylene diisocyanate, isophorone diisocyanate, hexamethylene diisocyanate, cyclohexyl diisocyanate, or 4,4-dicyclohexylmethane diisocyanate).

The diene monomer for the polydiene resin can be chosen from the family of butadiene; chloroprene 1,3 pentadiene; and cyclopentadiene. The preferred polydiene polyols are the hydroxy-terminated polybutadienes, with a number average molecular weight typically between 2000 and 15000 (preferably between 2000 and 5000). The hydroxy value in milliequivalents per gram (meg/g) is typically between 0.5 and 1.5 (preferably between 0.8 and 0.9). The viscosity is typically between 1000 and 10000 milli-Pascal-seconds (mPas) at 30.8°C. An example of the preferred resin is Poly bd® R-45-HT hydroxy terminated polybutadiene, available commercially from Elf Atochem.

The diol-containing carboxylic acid salt preferably is a compound containing one carboxylic acid salt functional group per molecule. Independently, the diol-containing carboxylic acid salt preferably has at least three carbon atom (more preferably, only three carbon atoms) intermediate between the two hydroxyl groups of the salt. Also, independently, it is preferred for a carboxylic acid salt functional group to be substituted on a carbon atom intermediate between the two carbon atoms bearing the two hydroxyl groups. Further, it is preferable for each of the two hydroxyl groups to be primary hydroxyl groups. Preferably, the diol-containing carboxylic acid salt corresponds to the general formula: 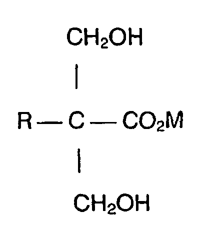 wherein R is H or a C₁-C₁₈alkyl group (preferably, R is methyl) and M is an alkali metal, ammonium or alkyl aryl or aralkyl ammonium (e.g., triethylammonium).

It has unexpectedly been discovered that the choice of reactants and the manner in which such reactants are combined can be critical to the successful preparation of aqueous polyurethane dispersions. When a hydroxylated polydiene resin is used, significant solubility problems are encountered when a free acid of a diol-containing carboxylic acid such as dimethylol propionic acid is used as a co-reactant. The solubility of the salts of such acids, particularly the alkylammonium salts, in the reaction mixture is much greater than that of the free acid, enabling the prepolymer to be more easily prepared.

Another problem which has been encountered using hydroxylated polydiene resins to prepare aqueous polyurethane dispersions is the formation of viscous gels when carboxylic acid groups in the prepolymer are neutralized by the addition of a base. Surprisingly, the use of an already neutralized diol-containing carboxylic acid rather than the free acid has been found to circumvent this problem.

The ratio of reactants used in preparing the prepolymer is normally chosen such that the NCO/OH molar ratio is greater than 1.4 (preferably between 1.5 and 2.5), taking into account that OH groups come from both the polydiene polyol and the diol.

The aqueous polyurethane dispersions are then prepared by dispersion of the prepolymer in water (typically such as to reach a final solids content in the range of 30 to 40 weight %, based on the overall weight of the dispersion); chain extension with a diamine such as hydrazine hydrate or ethylenediamine (typically in an amount such that the molar ratio of NH₂ groups to remaining NCO groups in the prepolymer is equal to 1.0), typically at a temperature between room temperature (about 25°C) and 80°C; and distillation (such as under vacuum) to remove solvent and obtain the aqueous dispersion.

As noted above, these dispersions are found to be useful for a variety of chemically resistant coating applications, such as for a maskant for chemical milling process. The absence of emulsifiers and/or surfactants in the dispersions as formulated above enables coatings prepared therefrom to show excellent resistances to mineral acids and bases, low temperature flexibility, low Tg, and good adhesion to a variety of substrates, especially metals such as aluminum, titanium, magnesium and steel.

A variety of methods are known in the art for including other additives in the final dispersion to enhance certain properties. For example, acrylics can be added to further enhance adhesion, acrylonitrile butadiene can be added to enhance strength and flexibility of the coatings, pigments and/or fillers (such as clay, talc and/or silicates) can be added to enhance stiffness and strength, thickeners can be added to enhance increase viscosity (maskants typically have a viscosity of about 1-8 Pascal seconds at 25°C), all as are conventionally known in the art.

Application of a maskant coating to a substrate, such as metal, is normally done by one or more coats via dipping, spraying, flowing or brushing. Typical dry film thicknesses are between 100 and 600 microns. Curing of the film can be done at room temperature (about 25°C) or with heat (up to about 120 °C). Drying times typically run from 1 to 20 hours, so as to reduce residual water to below about 3 weight %.

## Claims

1. A method of temporarily protecting a metal surface of a workpiece, said method comprising:
(a) applying to said metal surface of a coating of a silyl-free, aqueous polyurethane dispersion derived from the reaction product of a hydroxylated polydiene resin, a diol-containing carboxylic acid salt and an aliphatic diisocyanate, which reaction product has been dispersed in water and chain extended with a diamine;
(b) curing said coating to form a film;
(c) carrying out a mechanical or chemical treatment of said workpiece; and
(d) removing the film from said part.

2. The method of claim 1 wherein the diol-containing carboxylic acid salt is a salt of dimethylol propionic acid.

3. The method of claim 1 wherein the hydroxylated polydiene resin is a hydroxy terminated polybutadiene.

4. The method of claim 1 wherein step (a) is accomplished by brushing, spraying, dipping or flowing.

5. The method of claim 1 wherein step (d) is accomplished by peeling.

6. The method of claim 1 wherein step (c) comprises a chemical treatment selected from the group consisting of anodizing, plating, adhesive bonding and etching.

7. The method of claim 1 wherein step (c) comprises a mechanical treatment selected from the group consisting of forming, machining, drilling and routing.

8. The method of claim 1 comprising an additional step after step (b) and before step (c) of removing a portion of said film from said part.

9. The method of claim 8 wherein said portion is removed by mechanical or laser scribing.

10. The method of claim 1 wherein said metal surface is a polished alclad aluminum surface.

11. The method of claim 1 wherein said aliphatic diisocyanate is selected from the group consisting of tetramethyl xylene diisocyanate, cyclohexyl diisocyanate and 4, 4-dicyclohexyl methane diisocyanate.

12. The method of claim 1 wherein the hydroxylated polydiene resin has a number average molecular weight between 2000 and 5000.

13. The method of claim 1 wherein the hydroxylated polydiene resin has a hydroxy value between 0.5 and 1.5 milliequivalents per gram.

14. The method of claim 1 wherein the reaction product is prepared using an NCO/OH molar ratio greater than 1.4.

15. The method of claim 1 wherein the diamine is selected from the group consisting of hydrazine hydrate and ethylene diamine.

16. The method of claim 1 wherein said silyl-free, aqueous polyurethane dispersion additionally is comprised of at least one component related from the group consisting of acrylics, acrylonitrile butadiene, pigments, fillers and thickeners.

17. The method of claim 1 wherein said film after step (b) has a thickness of between 100 and 600 microns.

18. The method of claim 1 wherein step (b) is performed at a temperature of from about 25°C to about 120°C.

19. The method of claim 1 wherein said silyl-free, aqueous polyurethane dispersion is free of emulsifiers and surfactants.

20. The method of claim 1 wherein step (d) is accomplished without the use of a solvent.

## Patentansprüche

1. Verfahren zum vorübergehenden Schützen einer Metalloberfläche eines Werkstücks, wobei das Verfahren umfasst:
(a) Auftragen einer Beschichtung aus einer silylfreien, wässrigen Polyurethandispersion, die aus dem Reaktionsprodukt eines hydroxylierten Polydienharzes, eines diolhaltigen Carbonsäuresalzes und eines aliphatischen Diisocyanats abgeleitet ist, auf der Metalloberfläche, wobei das Reaktionsprodukt in Wasser dispergiert und mit einem Diamin kettenverlängert wurde;
(b) Härten der Beschichtung, um einen Film zu bilden;
(c) Durchführen einer mechanischen oder chemischen Behandlung des Werkstücks; und
(d) Entfernen des Films von dem Werkstück.

2. Verfahren nach Anspruch 1, wobei das diolhaltige Carbonsäuresalz ein Salz von Dimethylolpropionsäure ist.

3. Verfahren nach Anspruch 1, wobei das hydroxylierte Polydienharz ein hydroxylterminiertes Polybutadien ist

4. Verfahren nach Anspruch 1, wobei Schritt (a) durch Streichen, Sprühen, Tauchen oder Verlaufen ausgeführt wird.

5. Verfahren nach Anspruch 1, wobei Schritt (d) durch Abziehen ausgeführt wird.

6. Verfahren nach Anspruch 1, wobei Schritt (c) eine chemische Behandlung umfasst, die aus der Gruppe bestehend aus Anodisieren, Metallabscheidung, Kleben und Ätzen ausgewählt wird.

7. Verfahren nach Anspruch 1, wobei Schritt (c) eine mechanische Behandlung umfasst, die aus der Gruppe bestehend aus Formen, Spanen, Bohren und Ausfräsen ausgewählt wird.

8. Verfahren nach Anspruch 1, umfassend nach Schritt (b) und vor Schritt (c) einen zusätzlichen Schritt zum Entfernen eines Abschnitts des Films von dem Werkstück.

9. Verfahren nach Anspruch 8, wobei der Abschnitt durch mechanisches Ritzen oder Laserritzen entfernt wird.

10. Verfahren nach Anspruch 1, wobei die Metalloberfläche eine polierte aluminiumplattierte Aluminiumoberfläche ist.

11. Verfahren nach Anspruch 1, wobei das aliphatische Diisocyanat aus der Gruppe bestehend aus Tetramethylxyloldiisocyanat, Cyclohexyldiisocyanat und 4,4-Dicyclohexylmethandiisocynat ausgewählt wird.

12. Verfahren nach Anspruch 1, wobei das hydroxylierte Polydienharz eine zahlenmittlere Molmasse zwischen 2000 und 5000 aufweist.

13. Verfahren nach Anspruch 1, wobei das hydroxylierte Polydienharz einen Hydroxylwert zwischen 0,5 und 1,5 Milliäquivalent pro Gramm aufweist.

14. Verfahren nach Anspruch 1, wobei das Reaktionsprodukt mit einem NCO/OH-Molverhältnis von über 1,4 hergestellt wird.

15. Verfahren nach Anspruch 1, wobei das Diamin aus der Gruppe bestehend aus Hydrazinhydrat und Ethylendiamin ausgewählt wird.

16. Verfahren nach Anspruch 1, wobei die silylfreie, wässrige Polyurethandispersion zusätzlich mindestens einen Bestandteil umfasst, der zu der Gruppe bestehend aus Acrylen, Acrylnitrilbutadien, Pigmenten, Füllstoffen und Verdickungsmitteln gehört.

17. Verfahren nach Anspruch 1, wobei der Film nach Schritt (b) eine Dicke zwischen 100 und 600 Mikrometer aufweist.

18. Verfahren nach Anspruch 1, wobei Schritt (b) bei einer Temperatur von ungefähr 25°C bis ungefähr 120°C durchgeführt wird.

19. Verfahren nach Anspruch 1, wobei die silylfreie, wässrige Polyurethandispersion frei von Emulgatoren und oberflächenaktiven Stoffen ist.

20. Verfahren nach Anspruch 1, wobei Schritt (d) ohne Verwendung eines Lösemittels ausgeführt wird.

## Revendications

1. Procédé pour protéger temporairement une surface métallique d'une pièce à travailler, ledit procédé comprenant :
(a) l'application à ladite surface métallique d'un revêtement d'une dispersion aqueuse de polyuréthane exempt de groupe silyle, obtenue à partir du produit de réaction d'une résine polydiène hydroxylée, d'un sel d'acide carboxylique contenant un groupe diol et d'un diisocyanate aliphatique, lequel produit de réaction a été dispersé dans de l'eau et a subi une extension de chaîne avec une diamine;
(b) le durcissement dudit revêtement afin de former un film;
(c) la réalisation d'un traitement mécanique ou chimique de ladite pièce à travailfer; et
(d) le retrait du film de ladite pièce.

2. Procédé selon la revendication 1, dans lequel le sel d'acide carboxylique contenant un groupe diol, est un sel de l'acide diméthylol-propionique.

3. Procédé selon la revendication 1, dans lequel la résine polydiène hydroxylée est un polybutadiène à terminaison hydroxy.

4. Procédé selon la revendication 1, dans lequel l'étape (a) se réalise au moyen d'un brossage, d'une pulvérisation, d'une trempe, ou d'un écoulement.

5. Procédé selon la revendication 1, dans lequel l'étape (d) se réalise par pelage.

6. Procédé selon la revendication 1, dans lequel l'étape (c) comprend un traitement chimique choisi dans le groupe formé par l'anodisation, le revêtement métallique, le collage par adhésif et l'attaque chimique.

7. Procédé selon la revendication 1, dans lequel l'étape (c) comprend un traitement mécanique choisi dans le groupe formé par le façonnage, l'usinage, le perçage et le détourage.

8. Procédé selon la revendication 1, comprenant une étape supplémentaire de retrait d'une portion dudit film de ladite pièce, après l'étape (b) et avant l'étape (c).

9. Procédé selon la revendication 8, dans lequel ladite portion est retirée par traçage mécanique ou au laser.

10. Procédé selon la revendication 1, dans lequel ladite surface métallique est une surface d'aluminium polie revêtue d'aluminium.

11. Procédé selon la revendication 1, dans lequel ledit isocyanate aliphatique est choisi dans le groupe formé par le diisocyanate de tétraméthylxylène, le diisocyanate de cyclohexyle et le diisocyanate de 4,4-dicyclohexyl-méthane.

12. Procédé selon la revendication 1, dans lequel la résine polydiène hydroxylée possède une masse moléculaire moyenne en nombre, comprise entre 2 000 et 5 000.

13. Procédé selon la revendication 1, dans lequel la résine polydiène hydroxylée possède un indice hydroxyle compris entre 0,5 et 1,5 milliéquivalent par gramme.

14. Procédé selon la revendication 1, dans lequel le produit de réaction est préparé en employant un rapport molaire NCO/OH supérieur à 1,4.

15. Procédé selon la revendication 1, dans lequel la diamine est choisie dans le groupe formé par l'hydrazine hydratée et l'éthyléne-diamine.

16. Procédé selon la revendication 1, dans lequel ladite dispersion aqueuse de polyuréthane exempt de groupe sylyle se compose en plus d'au moins un composant apparenté du groupe formé par les acryliques, l'acrylonitrile/butadiéne, les pigments, les charges et les épaississants.

17. Procédé selon la revendication 1, dans lequel ledit film après l'étape (b) possède une épaisseur comprise entre 100 et 600 micromètres.

18. Procédé selon la revendication 1, dans lequel l'étape (b) est réalisée à une température allant d'environ 25°C à environ 120°C.

19. Procédé selon la revendication 1, dans lequel ladite dispersion aqueuse de polyuréthane exempt de groupe silyle est exempte d'émulsifiants et de tensio-actifs.

20. Procédé selon la revendication 1, dans lequel l'étape (d) se réalise sans l'utilisation d'un solvant.
